(19) Europäisches Patentamt
European Patent Office
Office européen des brevets

(11) EP 1 403 146 A2

(12) **EUROPEAN PATENT APPLICATION**

(43) Date of publication:
**31.03.2004 Bulletin 2004/14**

(51) Int Cl.[7]: **B60R 16/02**

(21) Application number: **03021751.7**

(22) Date of filing: **25.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.09.2002 JP 2002279503**
**01.09.2003 JP 2003308507**

(71) Applicant: **Yazaki Corporation**
**Minato-ku, Tokyo (JP)**

(72) Inventor: **Masayoshi, Sawai**
**Kosai-shi Shizuoka (JP)**

(74) Representative: **Grünecker, Kinkeldey, Stockmair & Schwanhäusser Anwaltssozietät**
**Maximilianstrasse 58**
**80538 München (DE)**

(54) **Method of assisting design of a wiring structure, its apparatus and its program**

(57) Amethod of assisting a wiring design of a wiring structure includes the steps of: regarding the wiring structure constituted by a plurality of pieces of line streak members as an elastic body which has a circular section and in which a plurality of beam elements a linearity of which is maintained are coupled with each other; applying information concerning a shape characteristic, a material characteristic and a constraining condition of the wiring structure as a predetermined condition to a finite element method;calculating a predicted shape of the displaced wiring structure such that the predetermined condition is satisfied; further calculating a characteristic value with respect to vibration for the calculated predicted shape; and outputting the calculated predicted shape and the calculated characteristic value.

*FIG. 1*

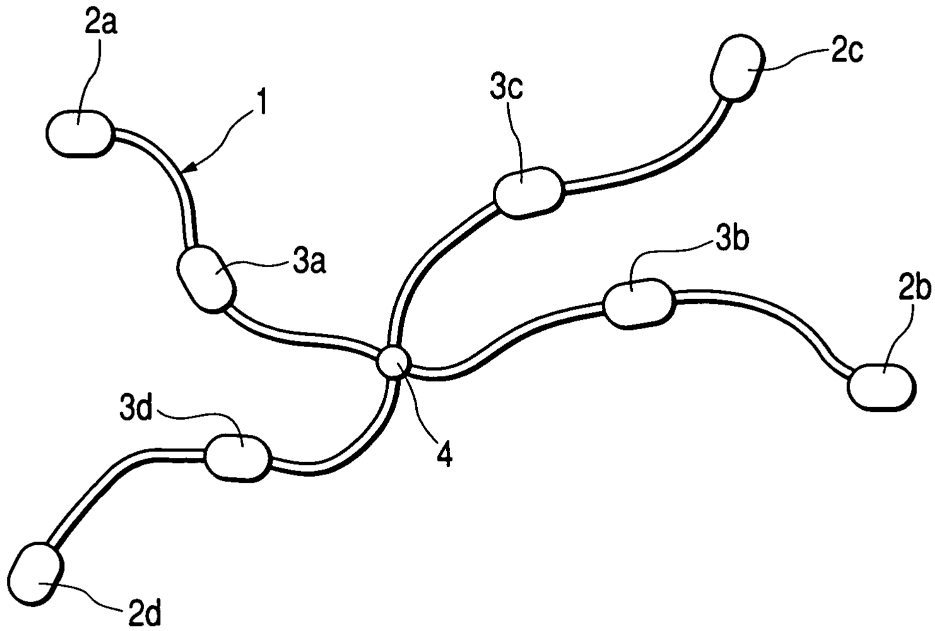


EP 1 403 146 A2

## Description

BACKGROUND OF THE INVENTION

Method of assisting wiring design of wiring structure, its apparatus and its program

The present invention relates to a method of assisting a wiring design of a wiring structure constituted by a plurality of line streak members, its apparatus and its program, particularly to a method of assisting an optimum wiring design in consideration of vibration of a wire harness wired to a vehicle as a wiring structure, its apparatus and its program.

Literatures cited in the specification are shown here as follows.

[Nonpatent Literature 1]

"Matrix finite element method" by B. Nas, Brain Publishing Co., August 10, 1978, p.7-15

[Nonpatent Literature 2)

"Mode Analysis and Dynamic Design" by Jinhiko Yasuda, November 10, 1993, p.54-56

However, there are various wire harnesses as described above and it is very difficult to design by accurately predicting also a rigidity against bending or torsion in each portion thereof. Therefore, integration as designed is frequently difficult and an unrealistic shape is frequently constituted. Therefore, in order to provide an optimum wiring shape of a wire harness, design and integration are repeated by trial and error and enormous time is dissipated. Further, according to such a method, a high degree of a skill is requested in carrying out an optimum wiring design.

Particularly, when a wire harness is wired to a vehicle, vibration by an engine, vibration by running and the like are frequently generated and therefore, it is preferable to design a wire harness such that a phenomenon in resonance with the vibrations is not brought about.

SUMMARY OF THE INVENTION

Therefore, in view of the above-described current state, it is a problem of the invention to provide a method of assisting a wiring design of a wire harness capable of carrying out a further precise wiring design of a wiring structure by also outputting a characteristic value with respect to vibration for a predicted shape of a wiring structure of a wire harness or the like easily and accurately without depending on skill of a designer, its apparatus and its program.

In order to solve the aforesaid object, the invention is characterized by having the following arrangement.

(1) Amethod of assisting a wiring design of a wiring structure comprising the steps of:

regarding the wiring structure constituted by a plurality of pieces of line streak members as an elastic body which has a circular section and in which a plurality of beam elements a linearity of which is maintained are coupled with each other;
applying information concerning a shape characteristic, a material characteristic and a constraining condition of the wiring structure as a predetermined condition to a finite element method;
calculating a predicted shape of the displaced wiring structure such that the predetermined condition is satisfied;
further calculating a characteristic value with respect to vibration for the calculated predicted shape; and
outputting the calculated predicted shape and the calculated characteristic value.

(2) The method according to (1) , wherein the characteristic value includes at least one of a natural frequency and a natural vibration mode.

(3) The method according to (1), wherein
the wiring structure is a wire harness wired to a vehicle,
the constraining condition is defined by coordinates of respective apexes of the plurality of beam elements and degrees of freedom at the respective apexes,
the shape characteristic is defined by a sectional area and a length of the beam element of the wiring structure, and
the material characteristic is defined by a moment of inertia, a polar moment of inertia, a density and a longitudinal modulus of elasticity and a transverse modulus of elasticity of the beam element.

(4) Amethod of assisting a wiring design of a wiring structure by calculating a predicted shape concerning a wiring structure constituted by a plurality of pieces of line streak members, the method comprising the steps of:

analyzing a characteristic value with respect to vibration for the predicted shape; and
outputting a result of the analysis.

(5) An apparatus of assisting a wiring design of a wiring structure in which the wiring structure constituted by a plurality of pieces of line streak members is regarded as an elastic body which has a circular section and in which a plurality of beam elements a linearity of which is maintained are coupled with each other, and a shape of the wiring structure which satisfies a predetermined condition is predicted by utilizing a finite element method, the apparatus comprising:

a setting unit for setting information concerning a shape characteristic, a material characteristic and a constraining condition of the wiring structure as the predetermined condition;
a predicted shape calculating unit for calculating a predicted shape of the displaced wiring structure such that the condition is satisfied by applying the predetermined condition to the finite element method;
a natural frequency calculating unit for calculating a natural frequency with respect to the predicted shape calculated by the predicted shape calculating unit; and
a first outputting unit for outputting the calculated predicted shape and the calculated natural frequency.

(6) The apparatus according to (5) further comprising:

a natural vibration mode calculating unit for calculating a natural vibration mode with respect to the predicted shape calculated by the predicted shape calculating unit; and
a second outputting unit for outputting the calculated predicted shape and the calculated natural vibration mode.

(7) An apparatus of assisting a wiring design of a wiring structure in which the wiring structure constituted by a plurality of pieces of line streak members is regarded as an elastic body which has a circular section and in which a plurality of beam elements a linearity of which is maintained are coupled with each other, and a shape of the wiring structure which satisfies a predetermined condition is predicted by utilizing a finite element method, the apparatus comprising:

a setting unit for setting information concerning a shape characteristic, a material characteristic and a constraining condition of the wiring structure as the predetermined condition;
a predicted shape calculating unit for calculating a predicted shape of the displaced wiring structure such that the condition is satisfied by applying the predetermined condition to the finite element method;
a natural vibration mode calculating unit for calculating a natural vibration mode with respect to the predicted shape calculated by the predicted shape calculating unit; and
an outputting unit for outputting the calculated predicted shape and the calculated natural vibration mode.

(8) A recording medium storing a program which causes a computer to function as an apparatus of assisting wiring design of a wiring structure in which the wiring structure constituted by a plurality of pieces of line streak members is regarded as an elastic body which has a circular section and in which a plurality of beam elements a linearity of which is maintained are coupled with each other, and a shape of the wiring structure which satisfies a predetermined condition is predicted by utilizing a finite element method, the program causing the computer to functions as:

a setting unit for setting information concerning a shape characteristic, a material characteristic and a constraining condition of the wiring structure as the predetermined condition;
a predicted shape calculating unit for calculating a predicted shape of the displaced wiring structure such that the condition is satisfied by applying the predetermined condition to the finite element method;
a natural frequency calculating unit for calculating a natural frequency with respect to the predicted shape calculated by the predicted shape calculating unit; and
an outputting unit for outputting the calculated predicted shape and the calculated natural frequency.

BRIEF DESCRIPTION OF THE DRAWINGS

Fig. 1 is a view showing an outline of a total shape of a wire harness constituting an object of design according to an embodiment of the invention.

Fig. 2 is a diagram showing a relationship between representative supporting members for supporting the wire harness and constrained degrees of freedom.

Fig. 3 (A) is a view showing an outlook of the wire harness, Fig. 3(B) is a view showing a state of digitizing the wire harness of Fig. 3 (A) and Fig. 3 (C) is a view expressing the wire harness of Fig. 3 (A) by a beam element and a node point.

Fig. 4 is a diagram for explaining a degree of freedom of the wire harness expressed by the beam element and the node point.

Fig. 5(A) is a diagram expressing the wire harness by three beam elements and Fig. 5 (B) is a diagram showing a state of coupling the three beam elements of Fig. 5(A).

Fig. 6 (A) is a view showing a state of measuring a moment of inertia and a longitudinal modulus of elasticity and Fig. 6 (B) is a view showing a state of measuring a polar moment of inertia and a transverse modulus of elasticity.

Fig. 7 is a block diagram showing an example of a hardware constitution according to the embodiment.

Fig. 8 is a flowchart showing a processing procedure according to the embodiment.

Fig. 9(A) through Fig. 9(C) are views respectively exemplifying output results in the procedure of respective processings shown in Fig. 8.

DETAILED DESCRIPTION OF PREFERRED EMBODIMENTS

An embodiment of the invention will be explained in reference to drawings as follows. First, an explanation will be given of a total shape of a wire harness as a wiring structure constituting an object of design and representative supporting members in reference to Fig. 1 and Fig. 2. Fig. 1 is a view showing an outline of the total shape of the wire harness constituting the object of design according to the embodiment of the invention. Fig. 2 is a diagram showing a relationship between the representative supporting members for supporting the wire harness and constrained degrees of freedom. The embodiment assists design by simulating to output a predicted shape for the wire harness shown here although a description thereof will be given later.

As described above, the wire harness 1 constituting the object of design according to the embodiment is attached with four connectors 2a, 2b, 2c, 2d both end portions of which are connected with electrical equipments, not illustrated, attached with the various clips 3a, 3b, 3c and 3d at middle portions thereof and is provided with the branch point 4. The respective branch lines of the wire harness 1 are basically provided with different numbers and kinds of respective constituent line streak members and therefore, the respective branch lines are provided with different boldnesses, lengths, elasticities, rigidities and the like.

The respective connectors 2a, 2b, 2c and 2d are attachably and detachably fixed at predetermined positions in accordance with fixed positions and mounting directions of opposed side connectors on sides of the electrical equipments to completely constrain end portions of the wire harness. Further, the respective clips 3a, 3b, 3c, 3dcompletelyconstrainorrotatably constrain predetermined portions of the wire harness at predetermined positions of cabinets, stays or the like of the electrical equipments.

Here, an explanation will be given of the clips. In the clips, basically, there are long hole clips and round hole clips. The round hole clip is referred to also as rotational clip and is constituted by a base seat portion holding the wire harness and a support leg inserted into an attaching hole in a shape of a round hole provided at the stay or the like. The round hole clip is rotatable around Z-axis (in a direction orthogonal to an attaching portion).

Meanwhile, the long hole clip is referred to also as fixed flip and is constituted by a base seat portion holding the wire harness and a support leg inserted into an attaching hole in a shape of a long hole provided at the stay or the like. A sectional shape of the support leg is constituted by a shape of a long hole substantially similar to that of the attaching hole. The long hole clip is not rotatable around Z-axis.

Further, in the long hole clip and the round hole clip, there are a corrugated long hole clip and a corrugated round hole clip rotatable around X-axes (in a longitudinal direction of the wire harness). Constrained degrees of freedom of the respective clips in respective axial directions and around respective axes are as shown by Fig. 2.

In Fig. 2, X-axis, Y-axis and Z-axis correspond to three axes orthogonal to each other in a right hand local coordinates system at respective node points (or also referred to as nodes) on the wire harness. Although for example, Z-axis is made to coincide with a clip axis, a method of determining the axes can pertinently be changed in accordance with a function used. Further, in the drawing, constrained degrees of freedom of the branch point are also shown for reference. Further, a node point on the wire harness arbitrarily set other than the above-described constrained points is basically completely free although not illustrated here. The constrained degrees of freedom are respectively set to the respective nodes prior to calculating a predicted path, a reaction force or the like as described later.

Next, an explanation will be given of outlines of assuming conditions constituting a premise, a utilized theory and basic equations in reference to Fig. 3 through Fig. 6. Fig. 3(A) is a view showing an outlook of the wire harness, Fig. 3(B) is a view showing a state of digitizing the wire harness, and Fig. 3(C) is a view showing the wire harness of Fig. 3(A) by beam elements and node points. Fig. 4 is a view for explaining degrees of freedom of the wire harness shown by the beam elements and the node points. Fig. 5 (A) is a view showing the wire harness by three beam elements and Fig. 5(B) is a view showing a state of coupling three of the beam elements of Fig. 5(A). Further, Fig. 6(A) is a view showing a state of measuring a moment of inertia and a longitudinal modulus of elasticity and Fig. 6 (B) is a view showing a state of measuring a polar moment of inertia and a transverse modulus of elasticity.

First, according to the embodiment, in utilizing a finite element method in designing the wire harness, it is assumed as follows.

(1) The wire harness is assumed to be an elastic body.
(2) The wire harness is assumed to be coupled with beam elements.
(3) It is assumed that linearity is maintained at each beam element.
(4) A section of the wire harness is assumed to be circular.

By assuming in this way in this embodiment, application of the finite element method to the wire harness which has not been carried out, can be carried out.

According to the embodiment, first, the wire harness is digitized. That is, as shown by Fig. 3(A), the wire harness 1 in which a plurality of electric wires 11 are bundled by a protective member of a tape 12 or the like can be regarded as a continuous body. Next, as shown by Fig. 3 (B), the wire harness 1 is divided (digitized) into a number of beam elements C1, C2, C3, ···. That is, since the wire harness is like a single piece of rope and therefore, the wire harness can be regarded to be connected with a finite number of pieces of the beam elements.

Therefore, as shown by Fig. 3(C), the wire harness can be represented by coupling the plurality of beam elements C1, C2, C3, ··· by a plurality of nodes N1, N2, N3, ···. Characteristic values necessary for the beam element are as follows.

length 1 (refer to Fig. 3(B))
sectional area A (refer to Fig. 3(B))
moment of inertia I
polar moment of inertia J
density p
longitudinal modulus of elasticity E
transverse modulus of elasticity G

Further, in the specification, shape characteristics are constituted by the length l and the sectional area A and material characteristic are constituted by the moment of inertia I, the polar moment of inertia J, the density ρ, the longitudinal modulus of elasticity E and the transverse modulus of elasticity although a description thereof will be given later.

Further, as shown by Fig. 4, each beam element C (C1, C2, C3, ···) is provided with two of a node point $\alpha$ and a node point $\beta$. In a three-dimensional space, the node point a is provided with 3 of translation components and 3 of rotation components and therefore, the node point $\alpha$ is provided with a total of 6 degrees of freedom. Further, the same goes with the node point $\beta$. Therefore, the beam element C is provided with 12 degrees of freedom.

Further, in the drawing,

$F_{xi}$: force in xi-axis direction of i-th element
$F_{yi}$: force in yi-axis direction of i-th element
$F_{zi}$: force in zi-axis direction of i-th element
$M_{xi}$: moment around xi-axis of i-th element
$M_{yi}$: moment around yi-axis of i-th element
$M_{zi}$: moment around zi-axis of i-th element
$U_{xi}$: displacement in xi-axis direction of i-th element
$U_{yi}$: displacement in yi-axis direction of i-th element
$U_{zi}$: displacement in zi-axis direction of i-th element
$\theta_{xi}$: angular displacement in xi-axis direction of i-th element
$\theta_{yi}$: angular displacement in yi-axis direction of i-th element $\theta_{zi}$: angular displacement in zi-axis direction of i-th element notation a designates the node point on the left side andnotation $\beta$ designates the node point on the right side.

It is known that Hook's law represented by Equation (1) shown below is established in displacement of a structure by a static force which is not vibrating in an elastic range.

$$Kx=F \tag{1}$$

where K: spring constant, x: displacement, F: force.

Further, it is known that Hook's law is established similarly also in the beam element C shown in Fig. 4. However, the beam element C is provided with 12 degrees of freedom as described above and therefore, a relationship between force and displacement can be expressed by a matrix of 12 rows and 12 columns and vectors of 12 rows as indicated by Equation (2) shown below.

[Equation 1]

$$\left[\begin{array}{cccccc|cccccc}
\frac{AE}{l} & 0 & 0 & 0 & 0 & 0 & -\frac{AE}{l} & 0 & 0 & 0 & 0 & 0 \\
0 & \frac{12EI_z}{l^3} & 0 & 0 & 0 & \frac{6EI_z}{l^2} & 0 & -\frac{12EI_z}{l^3} & 0 & 0 & 0 & \frac{6EI_z}{l^2} \\
0 & 0 & \frac{12EI_y}{l^3} & 0 & -\frac{6EI_y}{l^2} & 0 & 0 & 0 & -\frac{12EI_y}{l^3} & 0 & -\frac{6EI_y}{l^2} & 0 \\
0 & 0 & 0 & \frac{GJ}{l} & 0 & 0 & 0 & 0 & & -\frac{GJ}{l} & 0 & 0 \\
0 & 0 & -\frac{6EI_y}{l^2} & 0 & \frac{4EI_y}{l} & 0 & 0 & 0 & \frac{6EI_y}{l^2} & 0 & \frac{2EI_y}{l} & 0 \\
0 & \frac{6EI_z}{l^2} & 0 & 0 & 0 & \frac{4EI_z}{l} & 0 & -\frac{6EI_z}{l^2} & & 0 & 0 & \frac{2EI_z}{l} \\
\hline
-\frac{AE}{l} & 0 & 0 & 0 & 0 & 0 & \frac{AE}{l} & 0 & 0 & 0 & 0 & 0 \\
0 & -\frac{12EI_z}{l^3} & 0 & 0 & 0 & -\frac{6EI_z}{l^2} & 0 & \frac{12EI_z}{l^3} & 0 & 0 & 0 & -\frac{6EI_z}{l^2} \\
0 & 0 & -\frac{12EI_y}{l^3} & 0 & \frac{6EI_y}{l^2} & 0 & 0 & 0 & \frac{12EI_y}{l^3} & 0 & \frac{6EI_y}{l^2} & 0 \\
0 & 0 & 0 & -\frac{GJ}{l} & 0 & 0 & 0 & 0 & 0 & \frac{GJ}{l} & 0 & 0 \\
0 & 0 & -\frac{6EI_y}{l^2} & 0 & \frac{2EI_y}{l} & 0 & 0 & 0 & \frac{6EI_y}{l^2} & 0 & \frac{4EI_y}{l} & 0 \\
0 & \frac{6EI_z}{l^2} & & 0 & 0 & \frac{2EI_z}{l} & 0 & -\frac{6EI_z}{l^2} & 0 & 0 & 0 & \frac{4EI_z}{l}
\end{array}\right]
\left\{\begin{array}{c}
U_{x1\alpha} \\ U_{y1\alpha} \\ U_{z1\alpha} \\ \theta_{x1\alpha} \\ \theta_{y1\alpha} \\ \theta_{z1\alpha} \\ \hline U_{x1\beta} \\ U_{y1\beta} \\ U_{z1\beta} \\ \theta_{x1\beta} \\ \theta_{y1\beta} \\ \theta_{z1\beta}
\end{array}\right\}
=
\left\{\begin{array}{c}
F_{x1\alpha} \\ F_{y1\alpha} \\ F_{z1\alpha} \\ M_{x1\alpha} \\ M_{y1\alpha} \\ M_{z1\alpha} \\ \hline F_{x1\beta} \\ F_{y1\beta} \\ F_{z1\beta} \\ M_{x1\beta} \\ M_{y1\beta} \\ M_{z1\beta}
\end{array}\right\} \cdots (2)$$

An explanation will be given here of a compatibility condition and a condition of equilibrium. Here, for simplicity, as shown by Fig. 5(A), the wire harness is represented by 3 of the beam elements C1, C2, C3. In this case, displacements of the node point 1β of the beam elements C1 and the node point 2α of the beam element C2 are equal to each other and forces applied to the two node points are also balanced. Similarly, also displacements of the node point 2β of the beam element C2 and the node point 3α of the beam element C3 are equal to each other and forces applied to the two node points are also balanced. Therefore, the beam elements C1 and C2 and the beam elements C2 and C3 can be coupled as shown by Fig. 5(B) by satisfying continuity of the displacements and the condition of equilibrium.

Further, in the drawing,

$F_{xi}$: force in xi-axis direction of i-th element
$F_{yi}$: force in yi-axis direction of i-th element
$F_{zi}$: force in zi-axis direction of i-th element
$M_{xi}$: moment around xi-axis of i-th element
$M_{yi}$: moment around yi-axis of i-th element
$M_{zi}$: moment around zi-axis of i-th element
$U_{xi}$: displacement in xi-axis direction of i-th element
$U_{yi}$: displacement in yi-axis direction of i-th element
$U_{zi}$: displacement in zi-axis direction of i-th element
$\theta_{xi}$: angular displacement in xi-axis direction of i-th element
$\theta_{yi}$: angular displacement in yi-axis direction of i-th element
$\theta_{zi}$: angular displacement in zi-axis direction of i-th element and i=1α, 1β, 2α, 2β, 3α, 3β.

Further, when the continuity of the displacements and equilibrium of forces of the beam elements C1, C2, C3 shown in Fig. 5(B) are shown by a style similar to that of Equation (2) as mentioned above, Equation (3) is derived as follows.

[Equation 2]

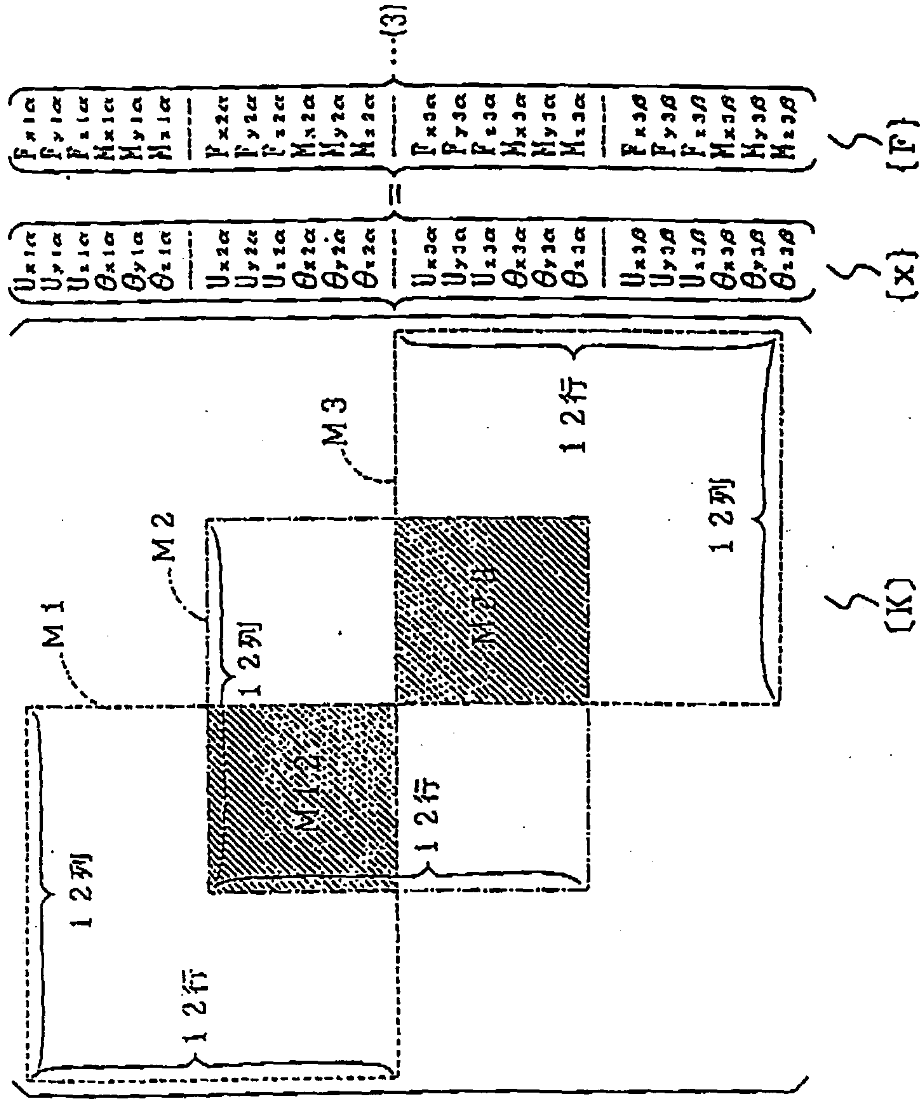


Here, matrices of 12 rows and 12 columns M1, M2 and M3 in Equation (3) are similar to those in shown in Equation (2). However, at the portions M12 and M13 at which the matrices M1, M2 and M3 overlap each other, respective constituent elements of the respective matrices are added together.

Further, 4 or more of the beam elements can similarly be dealt with. In this way, an equation model of a wire harness divided into an arbitrary number of beam elements can be formed.

Incidentally, Equation (3) is simply expressed as follows.

$$[K]\{x\} = \{F\} \qquad (4)$$

Therefore, for example, assuming that a clip is attached to each node point, when a force applied to the clip is previously determined, based on Equation (4), mentioned above, by calculating the displacement vector {x}, a path, that is, a shape of the wire harness can be calculated. Contrary thereto, when the path is determined, the force vector {F} at each node point can be calculated. Based on the basic way of thinking, according to the embodiment, apredicted path and strain, stress, reaction force, moment and the like of the wire harness are calculated. With regard to unknowns in the displacement vector {x} and the force vector {F}, solutions thereof can be calculated by publicly-known Newton-Raphson method, the arc length method or the like.

Further, the above-described general matrix finite element method is shown also in, for example, the above-described nonpatent literature 1.

Here, in the embodiment, an example of a way of calculating respective characteristic values necessary for the beam element will be shown as follows. First, the length 1, the sectional area A and the density p can be calculated by simple calculation after forming the wire harness constituting the object and measuring the length 1, the sectional area A and the density p by using a pair of calipers, a measure, a weight meter and the like.

Further, the longitudinal modulus of elasticity E can be represented by Equation (5), shown below, when a measuring method shown in Fig. 6(A) is carried out.

$$E=FL^3/3XI \qquad (5)$$

Further, the moment of inertia I can be represented by Equation (6), shown below, since the wire harness is assumed to be constituted by a circular section as mentioned above.

$$I=\pi D^4/64 \qquad (6)$$

Therefore, the following equation is established.

$$E=64FL^3/3X\pi D^4 \qquad (7)$$

According to the measurement, a relationship between F and x may be measured by constituting the following equation.

$$E=(F/X)\times(64L^3/3\pi D^4)$$

Meanwhile, the transverse modulus of elasticity G can be represented by Equation (8), shown below, when a measuring method shown in Fig. 6(B) is carried out.

$$G=(TL/\theta J)x2 \qquad (8)$$

Thepolarmoment of inertia J can be represented by Equation (9), shown below, since the wire harness is assumed to be constituted by the circular section.

$$J=\pi D^4/32 \qquad (9)$$

Further, the torsional force is expressed as follows.

$$F=FS \qquad (10)$$

Therefore, a relation between F and $\theta$ may be measured by the following equation.

$$G=(32FSL/\theta\pi D^4)\times 2=(F/\theta)(32SL/\pi D^4)\times 2 \qquad (11)$$

The above-described measuring methods are only examples and respective values may be acquired by methods other than those of the above-described measurement examples. Further, representative wire harnesses may previously be measured to form a database and the data base may pertinently be utilized.

Further, according to the embodiment, an analysis of a characteristic value with respect to vibration for the predicted shape of the wire harness, that is, a calculation of a natural frequency and a natural vibration mode is also carried out and therefore, a simple explanation will be given of a theory and a basic equation utilized in the calculation.

That is, an equation of motion in correspondence with Equation (4) is constituted by Equation (12), shown below, when the second law of Newton is applied.

$$[M]\{x''\} - [K]\{x\}=0 \qquad (12)$$

where [M] designates an inertia matrix and {x"} designates a time differential of second order of the displacement vector (x).

Now, when Equation (13) shownbelow is assumed as follows.

$$\{x\}=[X]e^{j}\omega^{t} \qquad (13),$$

The following equations are established.

$$\{x'\}=j\omega[X]e^{j}\omega^{t} \qquad (14)$$

$$\{x''\}=-\omega^{2}[X]e^{j}\omega^{t} \qquad (15)$$

Here, {x'} designates a time differential of first order of the displacement order {x}.

When Equation (13), Equation (14) and Equation (15) are substituted for Equation (12), the following equation is derived.

$$[M]\ (\omega^{2})\ (-\omega^{2}[X]e^{j}\omega^{t})-[K]\ ([X]e^{j}\omega^{t})=0$$

When the equation is furthermodified, Equation (16) shown below is finally provided.

$$(-\omega^{2}[M] - [K])\ [X]e^{j}\omega^{t}=0$$

$$(-\omega^{2}[M] - [K])\ [X]e^{j}\omega^{t}=0$$

$$(-\omega^{2}[M] - [K])\ [X]=0$$

$$(-\omega^{2}[I]-[M]^{-1}[K])\ [X]=0 \cdots (16)$$

where [I] designates a unit matrix, ω designates a natural frequency and [X] designates a natural vibration mode.

Further, the above-described general characteristic value analysis is shown also in, for example, Nonpatent Literature 2 shown above.

Therefore, the natural frequency and the natural vibration mode can be calculated for the predicted shape of the wire harness by using the above-described theory and basic equation.

Next, an explanation will be given of a hardware constitution according to the embodiment for calculating and outputting the shape of the wire harness in accordance with a processing procedure, mentioned later, by utilizing the above-described theory and basic equations. Fig. 7 is a block diagram showing the hardware constitution according to the embodiment.

As shown by Fig. 7, according to the embodiment, there is used, for example, a personal computer constituted by including a microcomputer 21, an input apparatus 22, a display apparatus 23, a printing apparatus 24, a storing apparatus 25, a communication interface 26 and a read/write apparatus 27. The microcomputer 21 includes CPU 21a (central processing unit), ROM 21b for storing boot programs and the like, and RAM 21c for temporarily storing various processing results. The input apparatus 22 is a keyboard, a mouse or the like for inputting the above-described various values and the like, the display apparatus 23 is LCD, CRT or the like for displaying the processing results and the printing apparatus 24 is a printer for printing the processing results.

Further, the storing apparatus 25 is a hard disk drive for storing an installed wiring design assisting program 29a and a processing result by the program 29a, the communicating interface 26 is a modem board or the like for carrying out data communication with an external apparatus by using, for example, the internet, an LAN circuit or the like. The read/write apparatus 27 is an apparatus of reading the wiring design assisting program 29a (in correspondence with Claims 8, 9) stored in a record medium 29 of CD-ROM, DVD-ROM or the like and writing a calculation result by the wiring design assisting program 29a to the record medium 29. The respective constituent elements are connected via an inner bus 28.

The microcomputer 21 installs the wiring design assisting program 29a read by the read/write apparatus 27 to the storing apparatus 25. Further, when a power source is inputted, the microcomputer 21 is started in accordance with boot programs stored to ROM 21b to start the installed wiring design assisting program 29a. Further, the microcomputer 21 carries out processings with regard to wiring design assistance according to the invention in accordance with the wiring design assisting program 29a, outputs a processing result from the display apparatus 23 or the printing apparatus 24 and holds the processing result at the storing apparatus 25 or the record medium 29. The wiring design assisting program 29a can be installed also to other personal computer or the like having the above-described basic constitution and makes the computer function as wiring design assisting apparatus after having been installed. Further, the wiring design assisting program 29a may be provided not only from the record medium 29 but by way of a communication network of the internet, LAN or the like.

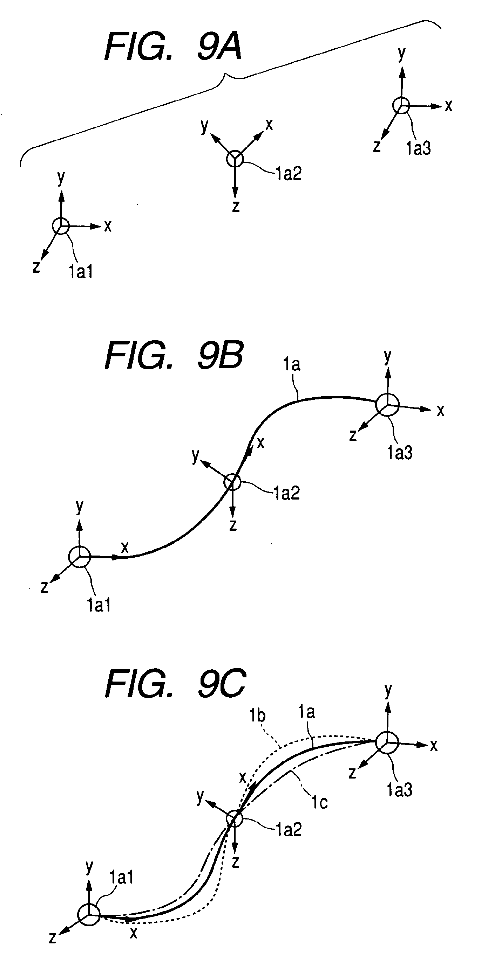

Further, an explanation will be given of a processing procedure according to the embodiment in reference to Fig. 8 and Fig. 9. Fig. 8 is a flowchart showing the processing procedure according to the embodiment which is carried out by using the hardware constitution shown in Fig. 7. Fig. 9(A) through Fig. 9(D) are views respectively exemplifying output results in a procedure of respective processings shown in Fig. 8.

First, at step S1 shown in Fig. 8, there is set a constraining condition at a portion of a wire harness constituting an object attached with a connector or a clip as shown by node points 1a1, 1a2 and 1a3 of Fig. 9(A). As the constraining condition, there are set kinds of constraint (completely constraint, rotatably constraint, completely free or the like) as shown by Fig. 2, local coordinates and the like for the respective node points 1a1, 1a2 and 1a3. The constraining conditions are in correspondence with a destination of deformation. As the respective node points 1a1, 1a2 and 1a3, portions attached with the supporting members of a connector, a clip and the like are allocated. Further, in setting the kinds of constraint, as shown by Fig. 2, names of the supporting members of the connector, the fixed clip and the like may be utilized. The respective values set here relate to respective elements in the displacement vector {x} in Equation (3).

Along therewith, at step S1, the shape characteristic and the material characteristic of the predicted wire harness are also set. As the shape characteristic, the length l and the sectional area A are set, and as the material characteristic, the moment of inertia I, the polar moment of inertia J, the density $\rho$, the longitudinal modulus of elasticity E and the transverse modulus of elasticity G are set. Values previously measured or calculated as described above are utilized therefor. The values set here relate to respective elements of the rigidity matrix [K] in Equation (3). Further, in setting the above-described respective values, the input apparatus 22 is used. In processing thereafter, the input apparatus 22 is used for setting the respective values, the shape calculating processing are carried out at the microcomputer 21 and the display apparatus 23 is used for outputting a result of the calculation.

Further, at step S1, there may be set a force f applied to a predetermined portion of the wire harness, for example, the node point 1a3 or the like in correspondence with a position of attaching the connector. The force f is made to be based on motion or the like of an operator anticipated in integration. Values set here relate to respective elements in the force vector [f] in Equation (3). Further, an initial shape may previously be calculatedprior to step S1. As an initial value for providing the initial shape, there can be used positions and constraining directions of both ends of the wire harness constituting the object attached with the connectors, a minimum bending radius depending on the material characteristic of the wire harness, a bending radius which can be bent by ordinary force of the operator when the wire harness is integrated and the like. Further, at step S1, various control values related to calculating processing and the like are also set. The step S1 corresponds to a setting unit of claims.

When there is a predetermined trigger for starting to calculate after finishing to set respective values necessary for calculating the shape, at step S2 and thereafter, there is calculated a predicted shape establishing equilibrium satisfying the set constraining condition or the like by utilizing the finite element method, the characteristic value is analyzed and results thereof are outputted. Further, until there is the predetermined finishing trigger, the predicted shape can repeatedly be outputted by changing to set the above-described respective values. The processing will be explained as follows.

That is, at step S2, a predicted shape 1a which is brought into a state in which the equilibrium is established dynamically is calculated as shown by Fig. 9(B) by applying the respective values necessary for calculating the shape set at step S1 to the finite element method, particularly to Equation (3). The predicted shape 1a shown in Fig. 9(B) may be outputted along with a result of calculating the natural frequency and the natural vibration mode as described later, or only the predicted shape 1a may be made to be able to output by itself. Further, the step S2 corresponds to a predicted shape calculating unit in Claims.

Next, at step S3, the natural frequency and the natural vibration mode are calculated for the predicted shape 1a calculated at step S2. In the calculating processing, Equation (16), mentioned above, or the like is utilized. Further, at step S4, as shown by Fig. 9(C), the predicted shape 1a, the natural frequency and the natural vibration mode calculated at step S2 and step S3 are outputted on the display apparatus 23. As a result of outputting the natural frequency and the natural vibration mode, as shown by a dotted line 1b and a broken line 1c of Fig. 9(C), it is preferable to add information of a waveform of the wire harness predicted from the calculated natural frequency and natural vibration mode, particularly, a maximum amplitude value or the like. By such an output result, it can intuitively be grasped whether the wire harness wired to satisfy the predetermined constraining condition interferes with various obstacles by vibration. For that purpose, the various obstacles or the like may be outputted on the display apparatus 23 along with results of outputting the predicted shape 1a, the natural frequency and the natural vibration mode. Further, the natural frequency and the natural vibration mode may be outputted by numerical values. Thereby, a comparison with a vibration frequency from a vibration source originated from the engine or the like of the vehicle is facilitated and the resonance phenomenon can effectively be prevented. Further, the step S3 corresponds to a natural frequency calculating unit and a natural vibration mode calculating unit in claims. Further, processing of outputting the natural frequency and the natural vibration mode at step S4 respectively correspond to a first outputting unit and a second outputting unit in claims.

Next, at step S5, presence or absence of a predetermined finishing trigger is determined, so far as there is not the finishing trigger, the operation proceeds to step S6 (N of step S5) and when there is the finishing trigger, the series of processing are finished (Y of step S5). Further, the finishing trigger is, for example, operation of a keyboard of the input apparatus 22 or the like.

At step S6, the respective values set at step S1 are changed to reset in consideration of a state of interfering with various obstacles and the resonance phenomenon by vibration. That is, the constraining condition, the shape characteristic and the material characteristic are changed such that resonance is not brought about by being effected with influence of the vibration source. Next, at step S7, the current predicted shape 1a on the display apparatus 23 is erased and thereafter, the operation returns to step S2. Further, at step S2 through step S4, the processing of calculating the predicted shape, the natural frequency and the natural vibration mode by utilizing the finite element method as well as a processing of outputting the result are carried out based on the respective values setting of which is changed until it is determined that there is the finishing trigger at step S5.

Further, when there is the finishing trigger at step S5, only the final predicted shape 1a of the wire harness as shown by Fig. 9(B) may be outputted.

In this way, according to the embodiment, the predicted shape of the wire harness and the influence by vibration can previously be known before carrying out integrating operation. Particularly, vibration by the engine, vibration by running or the like is frequently produced at the vehicle and therefore, the embodiment is very effective in designing the wire harness in which the vibrations and the resonance phenomenon are not brought about. As a result, the optimum wiring design of the wire harness can be carried out easily and accurately in a short period of time without depending on the skill of the designer. Naturally, by regarding the wire harness as the elastic body having the circular shape and coupled with the plurality of beam elements maintaining linearity, the finite element method can be applied and prediction of shape having higher accuracy is realized.

Further, the method and the apparatus of the invention are not limited to the wire harness wired at inside of the vehicle but applicable similarly to a wire harness wired at various apparatus generating vibration. Further, in order to prevent the resonance phenomenon, other than the method explained in the above-described embodiment, the vibration may be suppressed by applying significant damping.

According to the invention, the wiring structure constituted by the plurality of pieces of line streak members is regarded as the elastic body having the circular section and coupled with the plurality of beam elements maintaining linearity. Further, the predicted shape brought into the equilibrium state is calculated by applying the shape characteristic, the material characteristic and the constraining condition of the wiring structure constituting the object of prediction to the finite element method, the characteristic value with respect to vibration for the calculated predicted shape, that is, the natural frequency and the natural vibration mode are also calculated, and a result of the calculation is outputted. Therefore, the resonance phenomenon when vibration is generated at the object attached with the wiring structure can be known previously prior to carrying out integrating operation. As a result, further precise wiring design of the wiring structure can easily and accurately be carried out without depending on the skill of the designer.

Further, according to the, the invention is applied to the wire harness wired to the vehicle, the constraining condition is constituted by coordinates of respective apexes of the plurality of beam elements constituting the wiring structure and degrees of freedom at the respective apexes, the shape characteristic is constituted by the sectional area and the length of the beam element of the wiring structure, the material characteristic is constituted by the moment of inertia, the polar moment of inertia, the density, the longitudinal modulus of elasticity and the transverse modulus of elasticity of the beam element and therefore, very realistic design simulation of the wire harness can be carried out.

Particularly, at the vehicle, the vibration by the engine, the vibration by running and the like are frequently generated and therefore, the invention is very effective in designing the wire harness which does not bring out the resonance phenomenon in resonance with the vibrations.

Further, according to the invention by calculating the predicted shape with respect to wiring of the wiring structure constituted by the plurality of pieces of line streak member, in the method of assisting the optimum wiring design of the wiring structure, the characteristic value with respect to vibration for the predicted shape is analyzed, and a result of the analysis is outputted and therefore, the resonance phenomenon when vibration is generated at the object attached with the wiring structure can previously be known prior to carrying out integrating operation. As a result, further precise wiring design of the wiring structure can be carried out.

## Claims

1. Amethod of assisting a wiring design of a wiring structure comprising the steps of:

    regarding the wiring structure constituted by a plurality of pieces of line streak members as an elastic body which has a circular section and in which a plurality of beam elements a linearity of which is maintained are coupled with each other;
    applying information concerning a shape characteristic, a material characteristic and a constraining condition of the wiring structure as a predetermined condition to a finite element method;
    calculating a predicted shape of the displaced wiring structure such that the predetermined condition is satisfied;
    further calculating a characteristic value with respect to vibration for the calculated predicted shape; and
    outputting the calculated predicted shape and the calculated characteristic value.

2. The method according to claim 1, wherein the characteristicvalue includes at least one of a natural frequency and a natural vibration mode.

3. The method according to claim 1, wherein
    the wiring structure is a wire harness wired to a vehicle,
    the constraining condition is defined by coordinates of respective apexes of the plurality of beam elements and degrees of freedom at the respective apexes,
    the shape characteristic is defined by a sectional area and a length of the beam element of the wiring structure, and
    the material characteristic is defined by a moment of inertia, a polar moment of inertia, a density and a longitudinal modulus of elasticity and a transverse modulus of elasticity of the beam element.

4. Amethod of assisting a wiring design of a wiring structure by calculating a predicted shape concerning a wiring structure constituted by a plurality of pieces of line streak members, the method comprising the steps of:

    analyzing a characteristic value with respect to vibration for the predicted shape; and
    outputting a result of the analysis.

5. An apparatus of assisting a wiring design of a wiring structure in which the wiring structure constituted by a plurality of pieces of line streak members is regarded as an elasticbody which has a circular section and in which a plurality of beam elements a linearity of which is maintained are coupled with each other, and a shape of the wiring structure which satisfies a predetermined condition is predicted by utilizing a finite element method, the apparatus comprising:

    a setting unit for setting information concerning a shape characteristic, a material characteristic and a constraining condition of the wiring structure as the predetermined condition;
    a predicted shape calculating unit for calculating a predicted shape of the displaced wiring structure such that the condition is satisfied by applying the predetermined condition to the finite element method;
    a natural frequency calculating unit for calculating a natural frequency with respect to the predicted shape calculated by the predicted shape calculating unit; and
    a first outputting unit for outputting the calculated predicted shape and the calculated natural frequency.

6. The apparatus according to claim 5 further comprising:

a natural vibration mode calculating unit for calculating a natural vibration mode with respect to the predicted shape calculated by the predicted shape calculating unit; and
a second outputting unit for outputting the calculated predicted shape and the calculated natural vibration mode.

**7.** An apparatus of assisting a wiring design of a wiring structure in which the wiring structure constituted by a plurality of pieces of line streak members is regarded as an elastic body which has a circular section and in which a plurality of beam elements a linearity of which is maintained are coupled with each other, and a shape of the wiring structure which satisfies a predetermined condition is predicted by utilizing a finite element method, the apparatus comprising:

a setting unit for setting information concerning a shape characteristic, a material characteristic and a constraining condition of the wiring structure as the predetermined condition;
a predicted shape calculating unit for calculating a predicted shape of the displaced wiring structure such that the condition is satisfied by applying the predetermined condition to the finite element method;
a natural vibration mode calculating unit for calculating a natural vibration mode with respect to the predicted shape calculated by the predicted shape calculating unit; and
an outputting unit for outputting the calculated predicted shape and the calculated natural vibration mode.

**8.** A recording medium storing a program which causes a computer to function as an apparatus of assisting wiring design of a wiring structure in which the wiring structure constituted by a plurality of pieces of line streak members is regarded as an elastic body which has a circular section and in which a plurality of beam elements a linearity of which is maintained are coupled with each other, and a shape of the wiring structure which satisfies a predetermined condition is predicted by utilizing a finite element method, the program causing the computer to functions as:

a setting unit for setting information concerning a shape characteristic, a material characteristic and a constraining condition of the wiring structure as the predetermined condition;
a predicted shape calculating unit for calculating a predicted shape of the displaced wiring structure such that the condition is satisfied by applying the predetermined condition to the finite element method;
a natural frequency calculating unit for calculating a natural frequency with respect to the predicted shape calculated by the predicted shape calculating unit; and
an outputting unit for outputting the calculated predicted shape and the calculated natural frequency.

FIG. 1

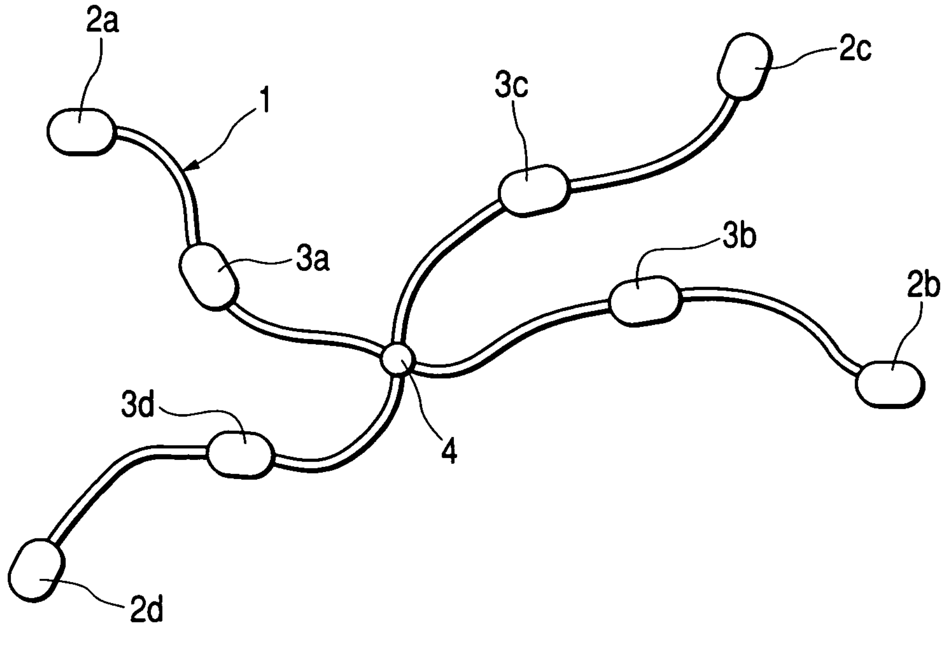

FIG. 2

| | CONSTRAINED DEGREE OF FREEDOM / SUPPORTING MEMBER | X-AXIS DIRECTION TRANSLATION | Y-AXIS DIRECTION TRANSLATION | Z-AXIS DIRECTION TRANSLATION | ROTATION AROUND X-AXIS | ROTATION AROUND Y-AXIS | ROTATION AROUND Z-AXIS |
|---|---|---|---|---|---|---|---|
| COMPLETELY CONSTRAINED | CONNECTOR | IMPOSSIBLE | IMPOSSIBLE | IMPOSSIBLE | IMPOSSIBLE | IMPOSSIBLE | IMPOSSIBLE |
| COMPLETELY CONSTRAINED | LONG HOLE CLIP | IMPOSSIBLE | IMPOSSIBLE | IMPOSSIBLE | IMPOSSIBLE | IMPOSSIBLE | IMPOSSIBLE |
| ROTATABLY CONSTRAINED | ROUND HOLE CLIP | IMPOSSIBLE | IMPOSSIBLE | IMPOSSIBLE | IMPOSSIBLE | IMPOSSIBLE | POSSIBLE |
| ROTATABLY CONSTRAINED | CORRUGATED LONG HOLE CLIP | IMPOSSIBLE | IMPOSSIBLE | IMPOSSIBLE | POSSIBLE | IMPOSSIBLE | IMPOSSIBLE |
| ROTATABLY CONSTRAINED | CORRUGATED ROUND HOLE CLIP | IMPOSSIBLE | IMPOSSIBLE | IMPOSSIBLE | POSSIBLE | IMPOSSIBLE | POSSIBLE |
| COMPLETELY CONSTRAINED | BRANCH POINT | POSSIBLE | POSSIBLE | POSSIBLE | POSSIBLE | POSSIBLE | POSSIBLE |

FIG. 3A

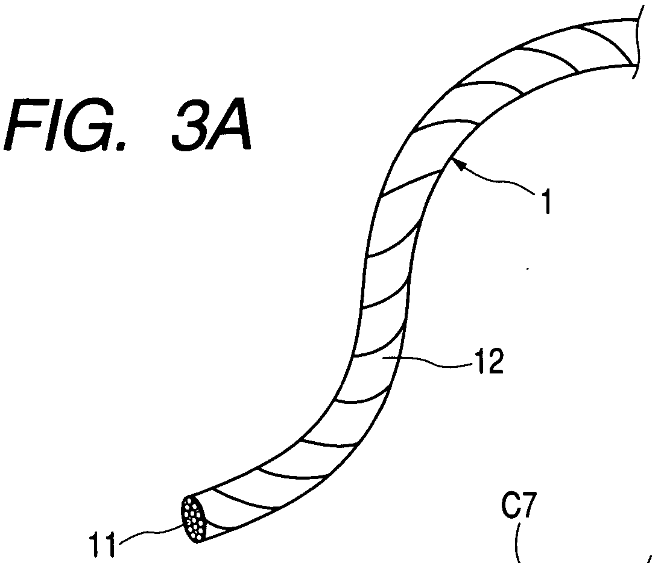


FIG. 3B

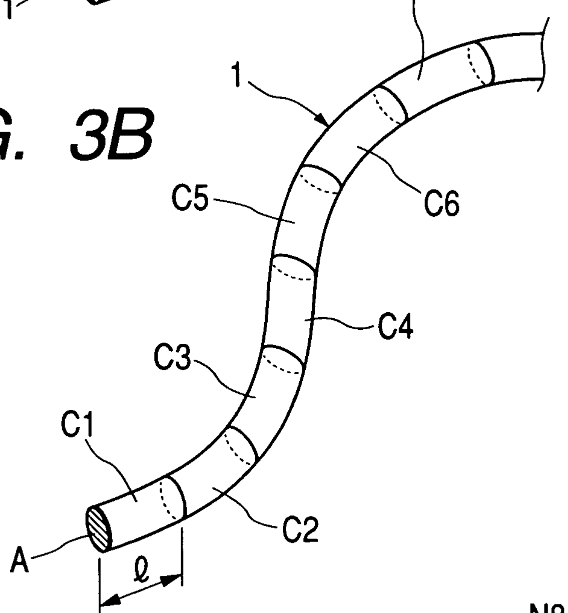


FIG. 3C

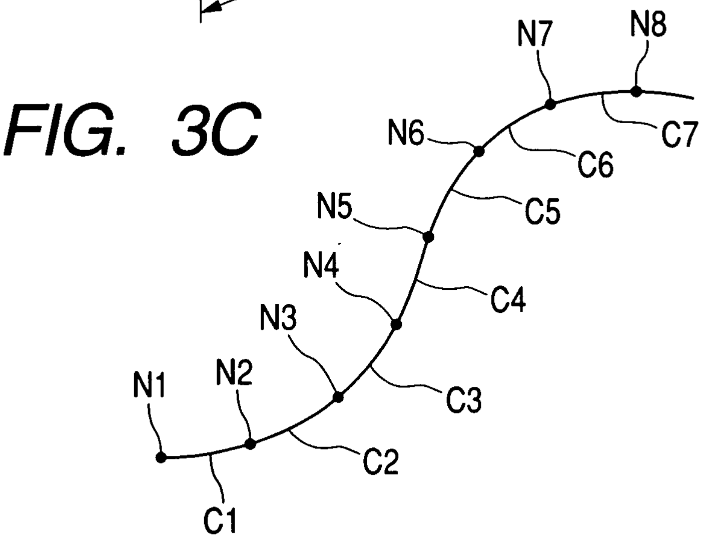

FIG. 4

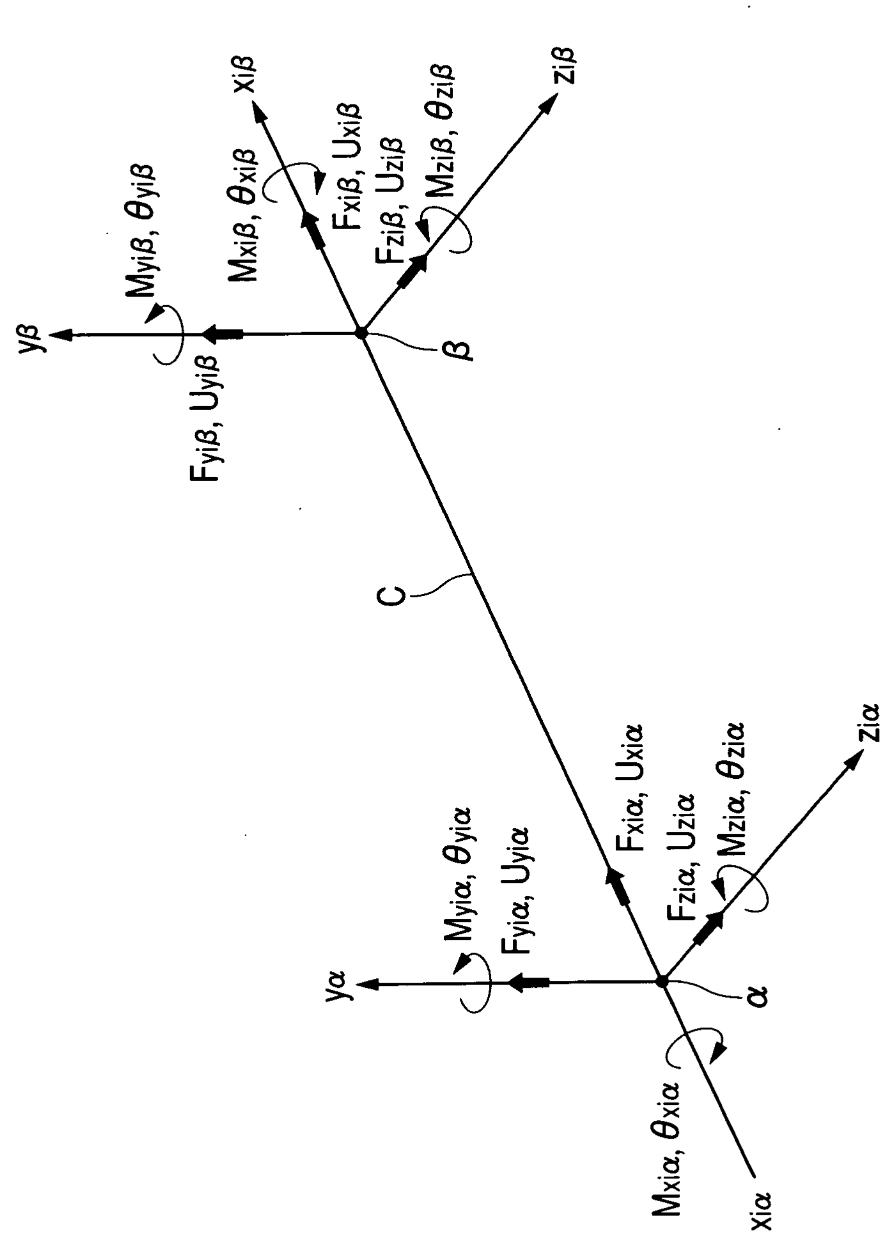
yβ
Myiβ, θyiβ
Fyiβ, Uyiβ
Mxiβ, θxiβ
Fxiβ, Uxiβ
xiβ
Fziβ, Uziβ
Mziβ, θziβ
ziβ
β
C
Myiα, θyiα
Fyiα, Uyiα
yα
Fxiα, Uxiα
Fziα, Uziα
Mziα, θziα
ziα
α
Mxiα, θxiα
xiα

FIG. 5A

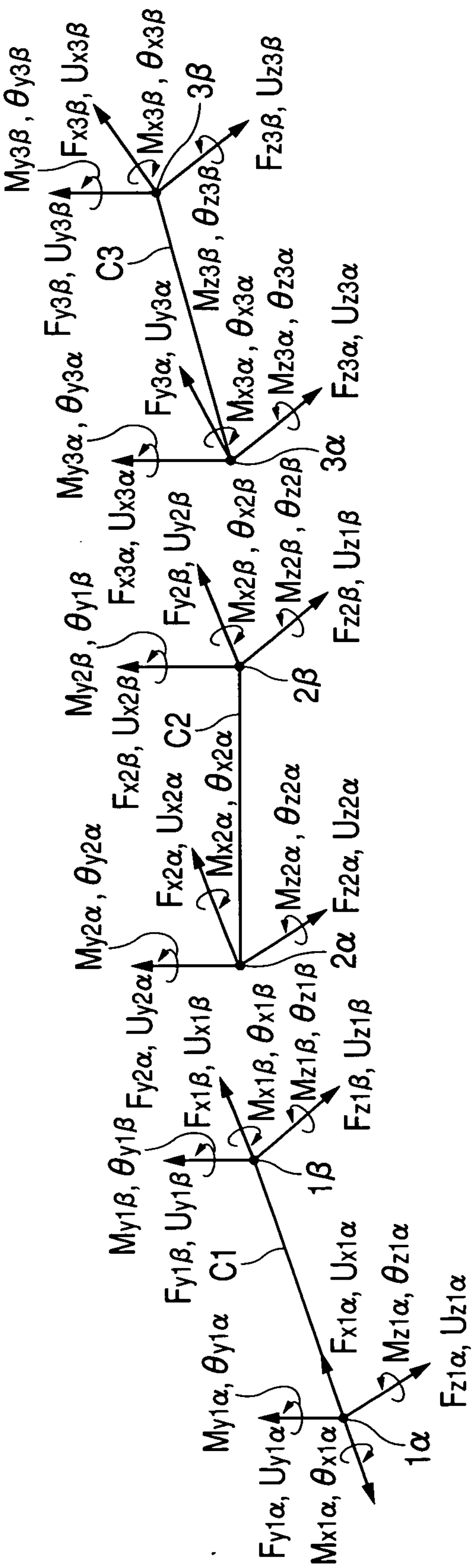
My1α, θy1α
Fy1α, Uy1α
Mx1α, θx1α
1α
Fx1α, Ux1α
Mz1α, θz1α
Fz1α, Uz1α
C1
My1β, θy1β
Fy1β, Uy1β
Fx1β, Ux1β
Mx1β, θx1β
Mz1β, θz1β
Fz1β, Uz1β
1β
Fy2α, Uy2α
My2α, θy2α
Fx2α, Ux2α
Mx2α, θx2α
Mz2α, θz2α
Fz2α, Uz2α
2α
C2
Fx2β, Ux2β
My2β, θy1β
Fy2β, Uy2β
Mx2β, θx2β
Mz2β, θz2β
Fz2β, Uz1β
2β
Fx3α, Ux3α
My3α, θy3α
Fy3α, Uy3α
Mx3α, θx3α
Mz3α, θz3α
Fz3α, Uz3α
3α
C3
Fy3β, Uy3β
My3β, θy3β
Fx3β, Ux3β
Mx3β, θx3β
Mz3β, θz3β
Fz3β, Uz3β
3β

FIG. 5B

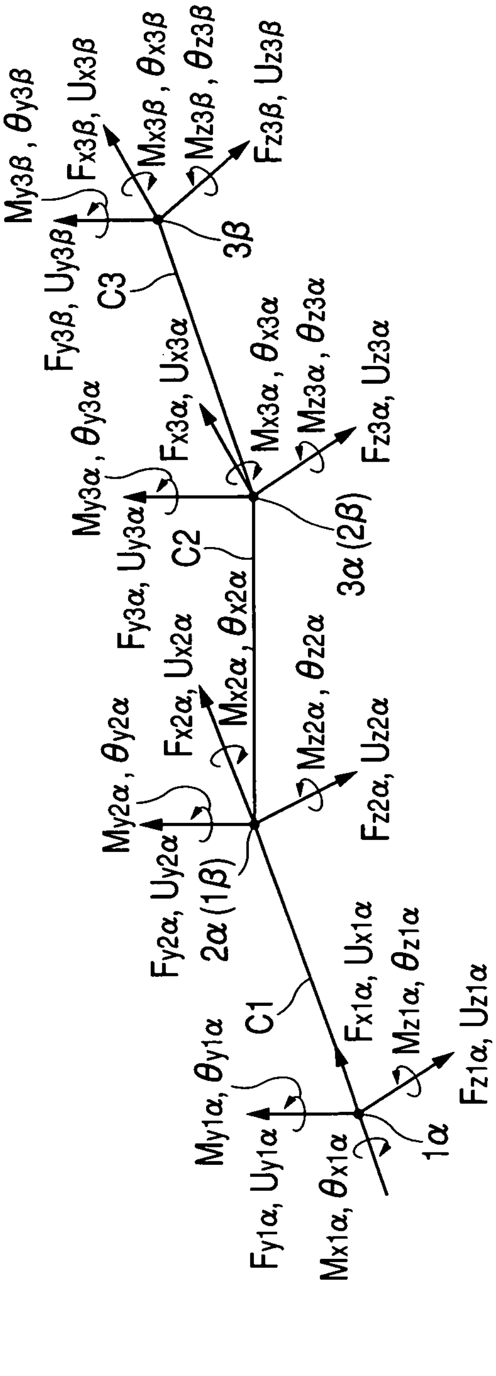
My1α, θy1α
Fy1α, Uy1α
Mx1α, θx1α
1α
Fx1α, Ux1α
Mz1α, θz1α
Fz1α, Uz1α
C1
Fy2α, Uy2α
2α (1β)
My2α, θy2α
Fx2α, Ux2α
Mx2α, θx2α
Mz2α, θz2α
Fz2α, Uz2α
C2
Fy3α, Uy3α
My3α, θy3α
Fx3α, Ux3α
Mx3α, θx3α
Mz3α, θz3α
Fz3α, Uz3α
3α (2β)
C3
Fy3β, Uy3β
My3β, θy3β
Fx3β, Ux3β
Mx3β, θx3β
Mz3β, θz3β
Fz3β, Uz3β
3β

FIG. 6A

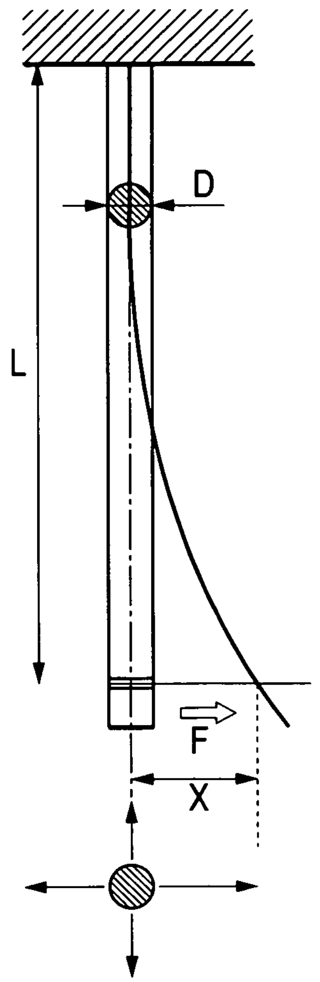


FIG. 6B

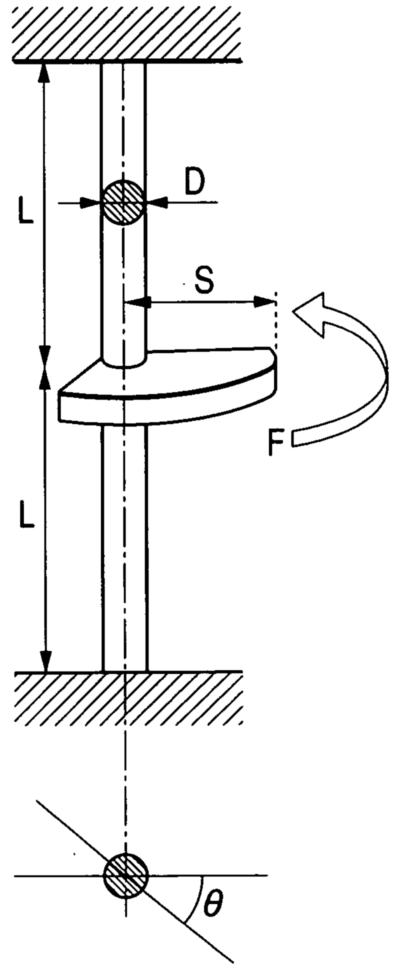

FIG. 7

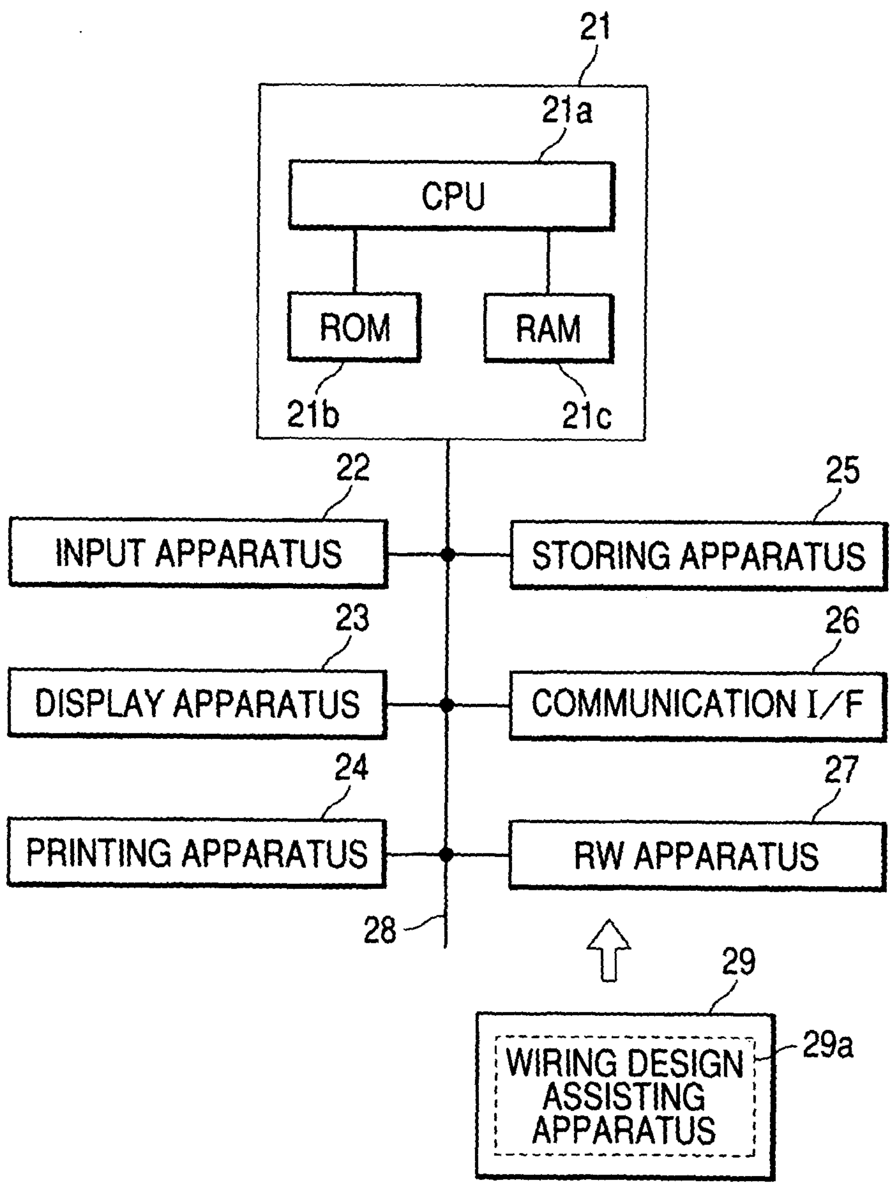
21
21a
CPU
ROM
RAM
21b
21c
22
INPUT APPARATUS
25
STORING APPARATUS
23
DISPLAY APPARATUS
26
COMMUNICATION I/F
24
PRINTING APPARATUS
27
RW APPARATUS
28
29
WIRING DESIGN ASSISTING APPARATUS
29a

FIG. 8

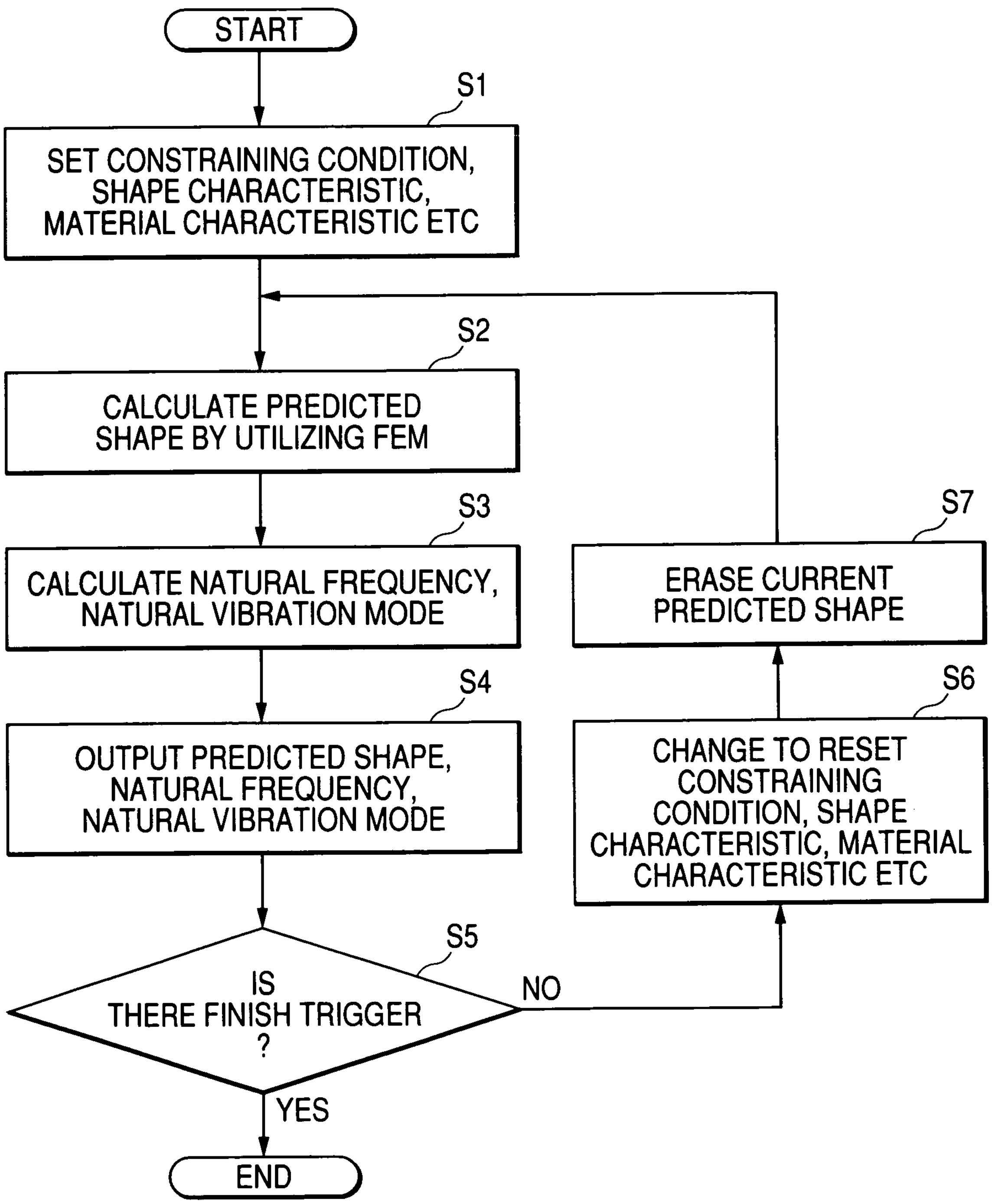
START
S1
SET CONSTRAINING CONDITION, SHAPE CHARACTERISTIC, MATERIAL CHARACTERISTIC ETC
S2
CALCULATE PREDICTED SHAPE BY UTILIZING FEM
S3
CALCULATE NATURAL FREQUENCY, NATURAL VIBRATION MODE
S4
OUTPUT PREDICTED SHAPE, NATURAL FREQUENCY, NATURAL VIBRATION MODE
S5
IS THERE FINISH TRIGGER ?
YES
END
NO
S6
CHANGE TO RESET CONSTRAINING CONDITION, SHAPE CHARACTERISTIC, MATERIAL CHARACTERISTIC ETC
S7
ERASE CURRENT PREDICTED SHAPE

FIG. 9A

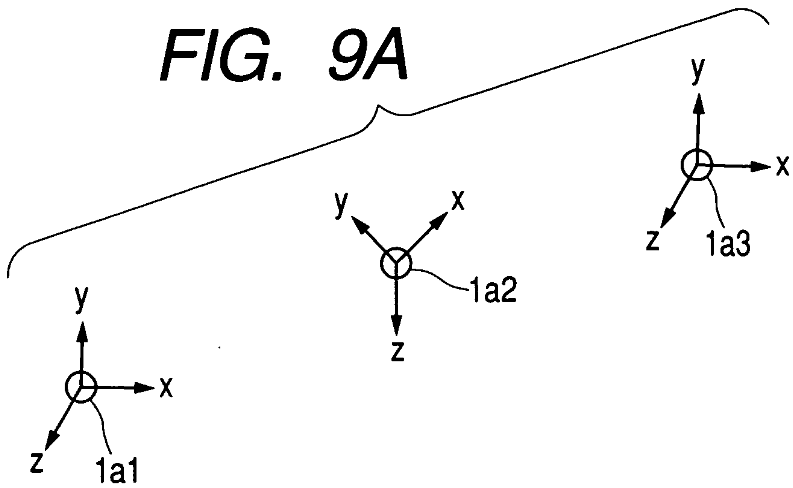


FIG. 9B

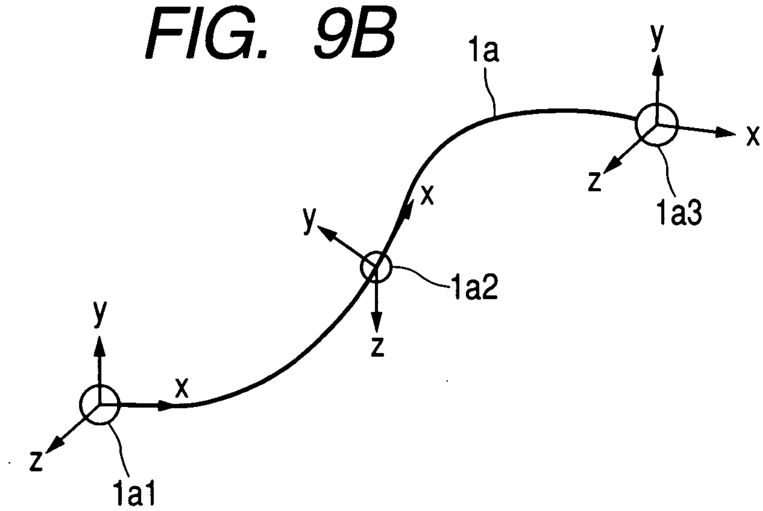


FIG. 9C